# EUROPEAN PATENT SPECIFICATION

(11) **EP 0 629 227 B1**
(45) Date of publication and mention of the grant of the patent: **11.09.1996**
(21) Application number: 93907101.5
(22) Date of filing: 03.03.1993
(51) Int. Cl.: C09J 123/16, C08L 23/16

(54) **STERILIZABLE HEAT-SEALED CONTAINERS OF HIGH ETHYLENE RANDOM COPOLYMER FILMS AND PROCESSES**
HEISSVERSIEGELTER, STERILISIERBARER BEHÄLTER AUS FOLIEN AUS STATISTISCHEM COPOLYMER MIT HOHEM AETHYLENGEHALT UND VERFAHREN
RECIPIENTS THERMOSOUDABLES STERILISABLES FABRIQUES A PARTIR DE FILMS COPOLYNERES STATISTIQUES A HAUTE TENEUR EN ETHYLENE ET LEURS PROCEDES DE FABRICATION

(30) Priority: 03.03.1992 US 845129
(43) Date of publication of application: 21.12.1994
(73) Proprietor: EXXON CHEMICAL PATENTS INC., Baytown, TX 77520-5200 (US)
(72) Inventor: OHLSSON, Stefan, Bertil Montagne au Chaudron 6, B-1150 Brussels (BE); WILLEMS, William, Frans, Maria, Josef, B-3140 Keerbergen (BE); ROHSE, Norbert, B-3090 Overijse (BE); LAMBERT, Philippe, Marie, 6926 Montagnola (CH); PATRICK, William, David, Crystal Lake, IL 60012 (US)
(74) Representative: Veldhuizen, Albert Dirk Willem
(86) International application number: US9301812
(87) International publication number: WO9318106

(56) References cited:
- EP-A- 0 061 238
- EP-A- 0 333 973
- DATABASE WPIL Section Ch, Week 8521, Derwent Publications Ltd., London, GB; Class A96, AN 85-125222
- DATABASE WPI Section Ch, Week 7743, Derwent Publications Ltd., London, GB; Class A92, AN 77-76865

## Description

### Background of the Invention

### Field of the Invention:

The present invention relates to heat-sealed containers of thermoplastic films and, more particularly, to such containers which are heat-sterilizable at temperatures between 120° to 130°C, clear or transparent and resistant to rupture if dropped onto a hard surface at ordinary ambient conditions. Such containers are commonly used in the food and medical industries.

### Summary of the Prior Art:

It is known to produce sterilizable and retortable heat-sealed containers or pouches from thermoplastic films and laminates of such films, some such containers being clear or transparent.

A retort container or pouch must posses the following properties, all of which are provided or affected by the inner seal layers:
1. they must be heat sealable for closing the container securely following filling;
2. they must be flexible and yet have sufficient toughness and impact strength to enable the pouch to withstand severe abuse testing in accordance with industry shipping standards.
3. they must be capable of withstanding sterilization at temperatures in the range of 121°C to 135°C to kill botulism;
4. they must posses non-blocking properties in that the interior opposed faces of the container must not stick together which would impede filling of the pouch;
5. the film used in the pouches must be processable without sticking as it is unrolled from the film roll during manufacture of the pouches and subsequent sterilization;
6. they must have sufficient capacity to be economical. (Institutions serving large numbers of people are not likely to use extensively containers having capacities less than one liter).

Most commonly such containers or pouches are produced from thermoplastic films having melting points above about 135°C, so as to require sterilization or retort temperatures of 135°C or higher. Unless the containers or pouches are heated to the softening temperature of the heat-sealed films, the heat seal does not soften and reform but rather becomes brittle when the container is cooled, whereby the container is susceptible to rupture if dropped at ambient conditions. At retort temperatures the fluids within the heat sealed container are generally steam autoclaved at a temperature of about 121°C, and the heat-sealed film must have a low water loss at such temperature during autoclaving and storage.

The use of higher autoclave temperatures above about 130°C and up to about 160°C, as required to soften prior-known heat-sealed containers, subjects the containers to more excessive autoclave conditions which can result in higher water loss during autoclaving and increased embrittlement and susceptibility to rupture if dropped.

It is known according to Japanese Application 59-74,109 to produce retortable film pouches from films comprising blends of two different types of polypropylene polymers, one being a random copolymer of propylene and ethylene having a low ethylene content of from 0.7 to 5.3 wt%, and the other being a block copolymer having an ethylene content of 40-80%. The average ethylene content of the blend is 5.5 to 17%. The random copolymer is formed in a first step and the blend is formed in a second step. The film has a melting point of 135° -155°C, preferably 140°-150°C.

Heat sealed pouches produced according to the Japanese application require high heat-seal temperatures above the softening point of the film, i.e., above about 135°-155°C, and require similar retort temperatures in order to soften and reset the heat seal during retort. Otherwise the heat seal becomes embrittled during retort and the container or pouch is susceptible to rupture if dropped on a hard surface at ambient temperatures.

It is also known according to U.S. Patents 4,857,409 and 4,769,261 to produce retortable, heat-seal pouches from film laminates which may include skin layers comprising blends of random reactor copolymers of polypropylene and from about 1% to 6 wt% ethylene or of impact reactor copolymers of propylene and from about 6% to 20 wt% ethylene, with elastomers such as rubbers.

Containers or pouches produced according to Patents 4,857,409 and for 4,769,261 are relatively expensive, due to the tri-film construction, and are unsatisfactory for low temperature sterilization at temperatures of 125°C or less because they have higher remelt temperatures and lower strength at remelt temperatures than is desirable. Thus unless they are heated to remelt temperatures of 135°C or more during retort, the heat seals are not reformed and become brittle after cooling, whereby the impact strength of the sealed container is unsatisfactory, especially for container sizes of one liter or more in capacity.

### Summary of the Invention

The present invention is concerned with the production of heat-sealable, soft, optically-clear containers or pouches which can be formed of heat-sealable monofilms having high tensile strength, and which have low remelt temperatures of about 131°C or less which permit sterilization of the filled, heat-sealed containers at said temperatures to reform the original heat seal of the container and preserve its original impact strength against rupture if the container is dropped onto a hard surface.

The objects and advantages of the present invention are accomplished by the discovery that films of certain polypropylene copolymers, namely isotactic random reactor copolymers of propylene containing a high content of ethylene, i.e., from about 5 to about 20 wt%, have excellent properties of tensile strength, clarity, non-blocking, low remelt, heat-sealability and related properties, so as to provide excellent results when formed into heat-sealable containers or pouches capable of being sterilized and seal-reformed at temperatures of about 131°C or less, to preserve their impact strength against rupture if dropped. The present copolymer films have lower hot tack temperatures and therefore are heat-sealable at lower temperatures and/or in shorter time periods than higher-melting films.

### Description of the Drawings

FIG. 1 is a graph illustrating the comparative heat seal strengths of sterilizable pouches produced according to the prior art (Film 1) and according to the present invention (Film 2), and
FIG. 2 is a graph illustrating the comparative hot tack properties of heat seals formed on pouches of Films 1 and 2.

### Detailed Description

The novel heat-sealable, steam-sterilizable containers or pouches of the present invention contain an inner seal film consisting of an isotactic random reactant copolymer of polypropylene and from 5% to 20% by weight of ethylene, which film has high tensile strength, good optical clarity, non-blocking and low remelt temperatures, in the area of 120°C to 130°C. The present filled containers can be heat-sealed at lower temperatures and/or under shorter heat-sealing durations than prior known inner seal films having higher remelt temperatures. Most importantly the present filled, heat-sealed containers can be sterilized at lower botulism-killing temperatures, between 121°C and 131°C, while undergoing remelt and reform of the heat-seal and alleviating the necessity for higher temperatures which can result in excessive water loss during autoclaving. The remelt or reform of the heat seal, preferably at a temperature of 125°C or less, causes the outline of the heat seal to change from a sharp to a rounded outline, evidencing fusion, and results in a flexible, reformed seal on cooling which is resistant to rupture under impact.

The present random reactor copolymers of polypropylene containing high amounts of ethylene may be produced by well-known polymerization methods using a Ziegler catalyst such as AlCl₃ and TiCl₄. Such copolymers have a density between about 0.86 and 0.92 gr/cc measured at 23°C according to ASTMD 1238 (conditions of 230°C and 2,16kg)*.*

The calculation of the ethylene content of the present random copolymers is determined by compression molding a plaque of the copolymer and measuring the height of the ethylene peak on a FTiR Spectrometer (type FTS 40-Digilab) according to test procedure P516.

In order to demonstrate the unexpectedly superior results arising from the use of the present random reactor copolymer films as inner seal films for heat-sealable flexible containers or pouches, such containers were produced according to the present invention and compared to similar containers produced according to commonly-assigned U.S. Patent 4,857,409.

The first film (Film 1 hereunder) which was for comparison purposes, is an 8 mil. (203 µm) ABA cast coextruded structure as described in USA patent 4,857,409; it consisted of a 6 mil. (152 µm) core of an elastomeric alloy consisting of a random copolymer of 97% propylene and 3% ethylene blended with polyisobutylene rubber. Then random copolymer of propylene and ethylene has a density of 0.90 g/cc measured at 23°C according to ASTM D1505 and a melt flow index of 1.7 gr/10 min. as determined according to ASTM D1238 (conditions 230°C and 2.16 Kg). On both faces of the core, there was a 1 mil. skin film of a pure random copolymer of propylene and ethylene, as described above.

The second film (Film 2 hereunder) is an 8 mil. (203 µm) monolayer blown on a tubular water bath, as described in USA patents 4,203,942 and 3,872,285, for example. Film 2 is made out of a pure random copolymer of propylene and ethylene with a 6.6 ethylene weight %, and a melt flow index of 1.3 gr/10 min. as determined according to ASTM D1238 (conditions 230°C and 2.16 Kg).

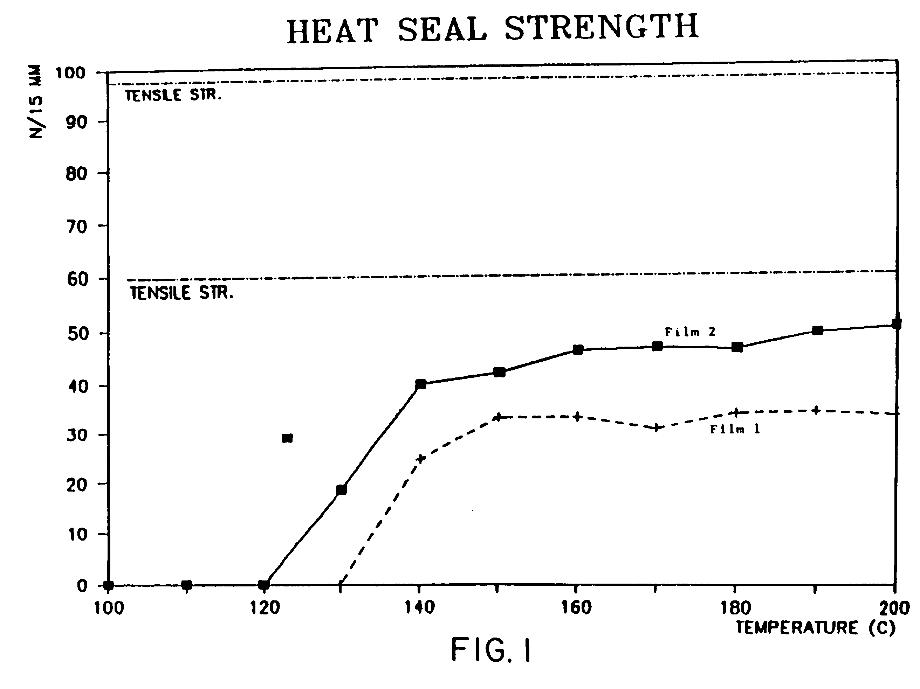

The accompanying Tables 1 to 3 and Figures 1-2 show the results obtained for the tensile strength at yield and at break, the elongation at yield and at break, the secant moduls, optical, barrier and seal properties.

These tests were carried out as follows:

### Tensile strenath, elongation, secant modules (1%)

These mechanical resistance tests were determined with an Instron tester according to ASTM D882.

### Haze

The optical properties of the film were determined with a Gardner Hazemeter, haze according to ASTM D1003.

### Barrier Properties

Humidity barrier properties were determined by measuring the water vapor transmission rate (WVTR) according to ASTM F372 at 37.8°C and 100% relative humidity using a Permatran W5 instrument from Modern Controls incorporated.

### Seal Strength (packforsk)

This is the "cold" heat seal strength of the film which is measured after the seal has cooled to ambient temperature and the full potential strength of the seal has developed.

A packforsk Hot Tack Tester (model 52-B) from Design & Test Consult AB (Bromme-Sweden) was used to make the heat seals. A strip of 15mm wide and some 280mm long is folded over upon itself and sealed together between the heated jaws of this instrument.

The formed seal has an area of some 15 x 5 mm. Dwell conditions on the seal have been kept constant at a pressure of 10 bar and a dwell time of 0.5 seconds. To measure the seal strength, the instrument is used in a mode whereby, upon opening of the sealing jaws, the automatic peeling action used for hot tack measurements is not activated. The seal is instead cooled to ambient temperature. The unsealed ends of the strip are then attached to the jaws of a tensile testing machine. The force required to break the seal at a rate of 500 mm/min. is recorded by the tensile tester and expressed as the seal strength in N/15 mm.

### Hot Tack

This is the strength of the heat seal measured just after the seal has been made and before the thermal energy employed to form the heat seal has dissipated. The hot tack has been determined using the same Packforsk instrument. The heat seal is made as described above, but just after the opening of the sealing jaws, a peeling action is automatically started and the the force to break the seal is automatically recorded and expressed as the hot tack in N/15 mm. The peeling operation takes place at a controlled delay time (= time between opening of the jaws and start of the peeling operation) and controlled peel rate. The following constant conditions have been used for all hot tack determinations: delay time - 0.6 seconds, peel rate = 100 mm/s.

One liter empty pouches were manufactured by heat sealing films 1 and 2 to themselves. The heat seal machine was of type Transwrap, manufactured by Robert Bosch. Different seal temperature and time settings were established to optimize pouch quality:
- Film 1: Dwell time - 1.6 sec. - seal temperature 175° Centigrade.
- Film 2: Dwell time - 1.2 sec. - seal temperature 175° Centigrade.

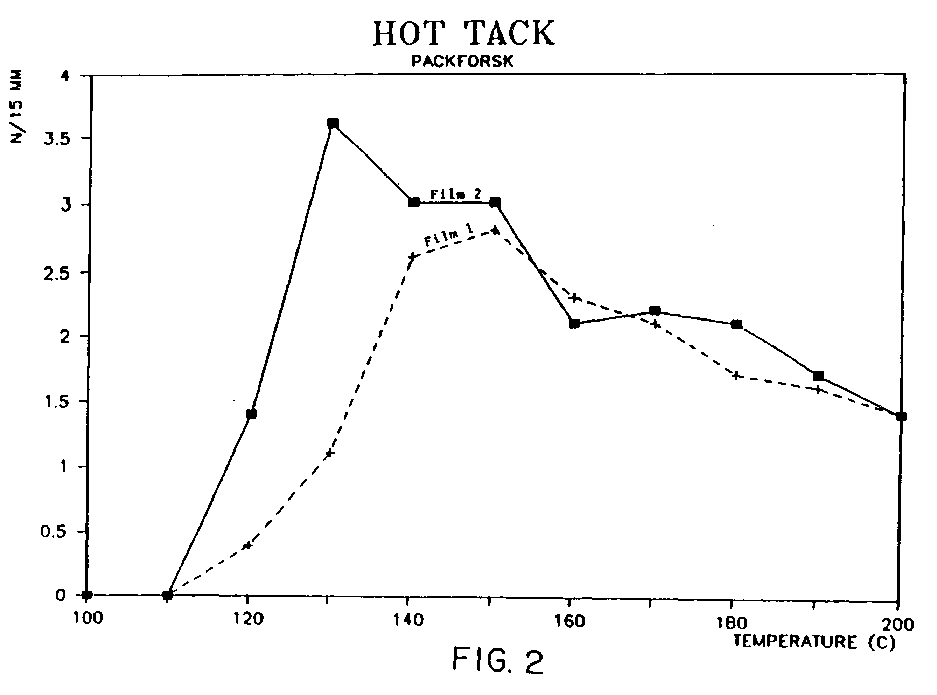

The shorter dwell time with Film 2 is made possible by the better hot tack of Film 2 (see Table 3 and Figure 2).

The pouches were filled with one liter of demineralized water, and bottom and top sealed on a Brugger Impulse Sealer with the same settings:
Dwell time - 1.5 seconds, seal pressure : one bar.
Impulse seal current - 2x61 amps.

They were then sterilized in a Getinge Autoclave Type GE-306 ECl using a direct water spray and 25 minute exposure to 121°C. The air counter-pressure used in the autoclave was 2.5 bars and cooling was carried out with 40°C water.

The filled and sterilized one liter pouches were submitted to various abuse testing - similar to those used in the intravenous solution industry : drop impact resistance, burst resistance and microscopy investigation.

The accompanying Table 4 summarizes the drop impact and burst resistance of the pouches made out of Films 1 and 2.

Microscopic evaluation indicates that Film 2 seal edges are round while Film 1 seal edges have a much sharper shape. This difference is visible in the sterilized pouches that had not been dropped ("ST"), the sterilized pouches that had been dropped without failure ("ST. DR.") and in the sterilized pouches that had failed the drop test ("ST. DR. F.").

These tests were carried out under the following conditions:

### Drop Impact Resistance

One hundred one liter pouches were dropped from a horizontal position from a height of 2 meters on a smooth cement surface. The were then inspected for leaks by manually squeezing them.

### Burst Resistance by Pressure Cuff

Individual pouches were compressed in a commercial pressure cuff Type C-Fusor 1000 sold by Medex Inc. used for pressure infusion of intravenous (IV) solutions in emergency situations. The pressure applied was 400 mm Hg during 15 minutes.

### Thitmonnier Burst Tester

This consists essentially of a plexiglass box with a piston-driven upper part. A filled pouch is introduced by opening a lateral side of the box. The piston then moves the upper part downward at a constant pressure (7 bars). The pouch is being pressed during 30 minutes after which is is inspected for leaks and deformation.

### Microscopy Evaluation of the Seal Edge

Filled and sterilized pouches were emptied and the side seals were cut and their edges were examined with a microscope (type Wild) equipped with a photographic head.

### Results

Table 1 shows that Film 2 is tougher than Film 1 (higher tensile at yield and at break). This result is obtained without compromising film softness (as measured by the 1% secant modulus).

Table 2 illustrates the higher clarity of Film 2 (lower haze), and also the lower moisture barrier which is the result of the more amorphous nature of the polypropylene.

Table 3 (and Figures 1 and 2) shows the superior seal strength of.Film 2, which can be related to higher toughness, and also the superior "hot tack" of Film 2 in the 120°C-150°C range, which suggests that Film 2 may run faster on form/fill/seal (FFS) packaging machines.

Table 4 outlines the very significantly improved drop resistance of Film 2 after sterilization; also microscopy pictures indicate the very distinct shapes of the seal edge obtained: Film 2 seal edges have a round shape while Film 1 are sharp. It is well known that sealed pouches with a wide radius at the seal edge allow a distribution on a wider film surface of the stress created by the impact of a pouch dropped from 2 meters high, and therefore are more impact resistant.

It is quite surprising to find out that the use of a high ethylene content in the random copolypropylene has such a positive effect on the film physical characteristics and the pouch impact resistance, compared to prior art polypropylene copolymer films based on a lower ethylene content.

**TABLE 1**

| **MECHANICAL PROPERTIES** | | | | |
|---|---|---|---|---|
| | FILM 2 | | FILM 1 | |
| | ORIGINAL | STERILIZED | ORIGINAL | STERILIZED |
| MD | | | | |
| | | | | |
| TENSILE (MPa) | | | | |
| at yield | 14.6 | 18.1 | 9.9 | 11.5 |
| at break | 31.8 | 33.8 | 20.7 | 19.3 |
| | | | | |
| ELONGATION (%) | | | | |
| at yield | 26 | 24 | 11 | 25 |
| at break | 578 | 614 | 589 | 558 |
| | | | | |
| SECANT MODULUS | 214 | 256 | 259 | 244 |
| 1% (MPa) | | | | |

| TD | | | | |
|---|---|---|---|---|
| | | | | |
| TENSILE (MPa) | | | | |
| at yield | 13.3 | 17 | 7.3 | 11.9 |
| at break | 32.2 | 30.7 | 16.7 | 20.8 |
| | | | | |
| ELONGATION (%) | | | | |
| at yield | 25 | 24 | 13 | 24 |
| at break | 695 | 601 | 595 | 590 |
| | | | | |
| SECANT MODULUS | 198 | 242 | 190 | 260 |
| 1% (MPa) | | | | |

**TABLE 2**

| **OPTICAL & BARRIER PROPERTIES** | | | | |
|---|---|---|---|---|
| | FILM 2 | | FILM 1 | |
| | ORIGINAL | STERILIZED | ORIGINAL | STERILIZED |
| HAZE, AIR | 6.1 | 17.3 | 21.2 | 18.3 |
| WVTR (g/m² day) | 3.2 | 3.2 | 1.7 | 1.7 |

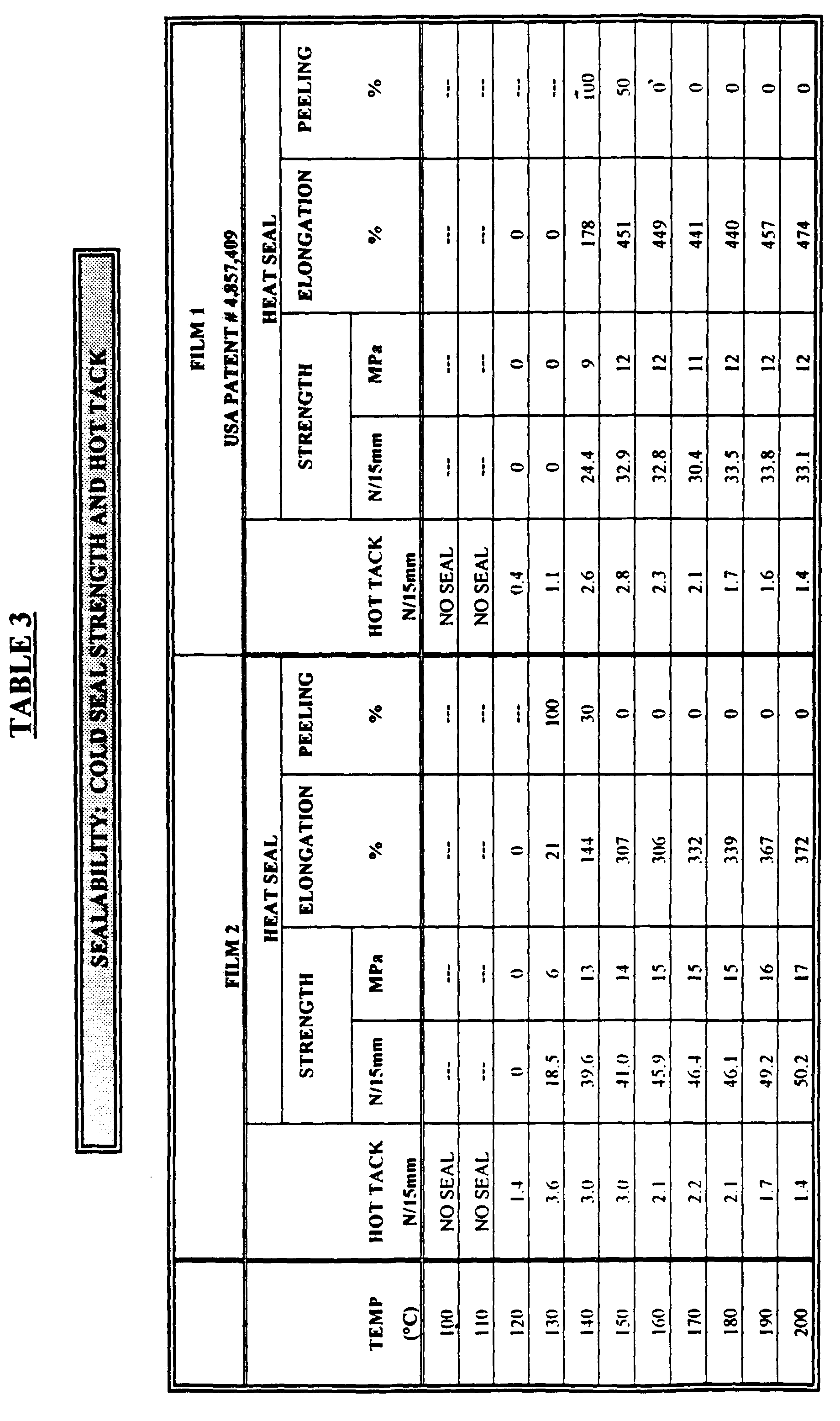

**TABLE 4**

| **DROP IMPACT AND BURST RESISTANCE OF STERILIZED** POUCHES | | |
|---|---|---|
| | FILM 2 | FILM 1 AS PER USA PATENT #4857409 |
| DROP IMPACT | | |
| % SEAL FAILURES | 4 | 38 |
| | | |
| BURST RESISTANCE | | BALLOONING AND BURSTING |
| BY PRESSURE CUFF | NO FRACTURE | AT 350 MM Hg |
| | | |
| THIMONNIER BURST | NO FRACTURE AT 7 | BALLOONS AND EXPLODES |
| TESTER | BARS * DURING 15 MINUTES | AT 7 BARS * |

| | | |
|---|---|---|
| * 7 bars at the piston corresponds to 0.12 bars on the bag. | | |

It should be understood that the present invention applies to pouches or containers formed from monolayers of isotactic random reactant copolymers of polypropylene and from about 5% to about 20% by weight of ethylene, sealed to each other, or to pouches or containers formed from multilayer laminates or coextrudates of such copolymer films and other films such as polyolefins, block copolymer films, etc., provided that the high ethylene random copolymer film is the surface film which is heat-sealed to itself to form the pouch or container.

Among the preferred high ethylene random copolymer films for use according to the present invention are Exxon films PLTD 661, 6.1% ethylene, MPt 122.5°C, remelt temp. 124.9°C, and PLTD 572-2, 6.7% ethylene, MP+ 116.9°C, remelt temp. 121.9°C.

It will apparent to those skilled in the art in the light of the present disclosure, that other pure random polymers of polypropylene and from about 5 to 20% by weight of ethylene, most preferably from about 5.5 to 10% by weight of ehtylene, are also suitable for use according to the present invention, including terpolymers containing minor amounts, up to about 5% by weight of other olefinic monomers containing from 4 to 8 carbon atoms, such as butene, provided that they have remelt temperatures, preferably below about 125°C and above about 120°C so as to reform their heat seals under normal steam sterilization temperatures.

It is to be understood that the above described embodiments of the invention are illustrative only and that modifications throughout may occur to those skilled in the art. Accordingly, this invention is not to be regarded as limited to the embodiments disclosed herein but is to be limited as defined by the appended claims.

## Claims

1. Process for producing heat-sealable containers or pouches of plastic film, which are heat-sterilizable at temperatures between 120°C and 130°C and which reform their heat seals at such temperatures in order to retain the flexibility and resistance of said heat seals to rupture or leak under impact and/or compression forces, comprising forming said pouches or containers by superposing films of isotactic random reactant polymers of polypropylene containing from 5% to 20% by weight of ethylene, heat sealing said films to each other to form containers or pouches on which the heat-seals remelt and reform during heat-sterilization of the container or pouch at a temperature within the range of from 120°C to 130°C.

2. Process according to claim 1 in which said films of isotactic random reactant polymers are monofilms.

3. Process according to claim 1 in which said films of isotactic random reactant polymers comprise the surface films of multi-film laminates, which surface films are heat-sealed to each other.

4. Process according to claim 1 in which said films of isotactic random reactant polymers have a thickness between 6 and 10 mils (152-254 µm).

5. Process according to claim 1 in which said films of isotactic random reactant polymers contain from 5.5% to 10% by weight of polyethylene.

6. Process according to claim 1 in which said films of isotactic random reactant polymers provide heat seals which remelt and reform at a temperature of 125°C or less.

7. A heat-sealable container or pouch of plastic film, which is heat-sterilizable at temperatures between 120°C and 130°C and which reforms its heat seals at such temperatures in order to retain the flexibility and resistance of said heat seals to rupture or leak under impact and/or compression forces, comprising superposed films of isotactic random reactant polymers of polypropylene containing from 5% to 20% by weight of ethylene which are heat-sealed to each other to form a container or pouch, the heat seals between said films being remeltable and reformable during sterilization within the range of from 120°C to 130°C to render the container or pouch resistant to rupture or leakage under impact and/or compressive forces.

8. A container or pouch according to claim 7 in which said films of isotactic random reactant polymer are monofilms.

9. A container or pouch according to claim 7 in which said films of isotactic random reactant polymer comprise the surface films of multi-film laminates, which surface films are heat-sealed to each other.

10. A container or pouch according to claim 7 in which said films of isotactic random reactant polymers have a thickness between 6 and 10 mils (152-254 µm).

11. A container or pouch according to claim 7 in which said films of isotactic random reactant polymers contain from 5.5% to 10% by weight of polyethylene.

12. A container or pouch according to claim 7 in which said films of isotactic random reactant polymers provide heat seals which remelt and reform at a temperature of 125°C or less.

13. A container or pouch according to claim 7 having a capacity of one liter or more.

## Patentansprüche

1. Verfahren zur Herstellung heißsiegelbarer Behälter oder Beutel aus Kunststoffolien, die bei Temperaturen zwischen 120°C und 130°C hitzesterilisierbar sind und ihre Heißversiegelungen bei jenen Temperaturen umformen, um die Flexibilität und Widerstandsfähigkeit der Heißversiegelungen gegen Reißen (Bruch) oder Lecken unter Stoß- und/oder Druckkräften beizubehalten, bei dem die Beutel oder Behälter durch Übereinanderlegen von Folien aus isotaktischen Polymeren mit statistisch verteilten Reaktanten aus Polypropylen, das 5 bis 20 Gew.% Ethylen enthält, gebildet werden, die Folien unter Bildung von Behältern oder Beuteln miteinander heißversiegelt werden, wobei die Heißversiegelungen während der Hitzesterilisation des Behälters oder Beutels bei einer Temperatur im Bereich von 120°C bis 130°C erneut schmelzen (umschmelzen) und sich umformen.

2. Verfahren nach Anspruch 1, bei dem die Folien aus isotaktischen Polymeren mit statistisch verteilten Reaktanten Einschichtfolien sind.

3. Verfahren nach Anspruch 1, bei dem die Folien aus isotaktischen Polymeren mit statistisch verteilten Reaktanten die Oberflächenfolien von Laminaten aus mehreren Folien umfassen, wobei die Oberflächenfolien miteinander heißversiegelt werden.

4. Verfahren nach Anspruch 1, bei dem die Folien aus isotaktischen Polymeren mit statistisch verteilten Reaktanten eine Dicke zwischen 6 und 10 mil (152 bis 254 µm) haben.

5. Verfahren nach Anspruch 1, bei dem die Folien aus isotaktischen Polymeren mit statistisch verteilten Reaktanten 5,5 bis 10 Gew.% Polyethylen enthalten.

6. Verfahren nach Anspruch 1, bei dem Folien aus isotaktischen Polymeren mit statistisch verteilten Reaktanten Heißversiegelungen liefern, die bei einer Temperatur von 125°C oder weniger erneut schmelzen (umschmelzen) und sich umformen.

7. Heißsiegelbarer Behälter oder Beutel aus Kunststoffolie, der bei Temperaturen zwischen 120°C und 130°C hitzesterilisierbar ist und seine Heißversiegelungen bei jenen Temperaturen umformt, um die Flexibilität und Widerstandsfähigkeit der Heißversiegelungen gegenüber Reißen (Bruch) oder Lecken unter Stoß- und/oder Druckkräften beizubehalten, und der übereinanderliegende Folien aus isotaktischen Polymeren mit statistisch verteilten Reaktanten aus Polypropylen, das 5 bis 20 Gew.% Ethylen enthält, umfaßt, die miteinander unter Bildung eines Behälters oder Beutels heißversiegelt sind, wobei die Heißversiegelungen zwischen den Folien während der Sterilisation im Bereich von 120°C bis 130°C erneut schmelzbar (umschmelzbar) und umformbar sind, um den Behälter oder Beutel widerstandsfähig gegen Reißen (Bruch) oder Lecken unter Stoß- und/oder Druckkräften zu machen.

8. Behälter oder Beutel nach Anspruch 7, bei dem die Folien aus isotaktischem Polymer mit statistisch verteilten Reaktanten Einschichtfolien sind.

9. Behälter nach Anspruch 7, bei dem die Folien aus isotaktischen Polymer mit statistisch verteilten Reaktanten die Oberflächenfolien von Laminaten aus mehreren Folien umfassen, wobei die Oberflächenfolien miteinander heißversiegelt sind.

10. Behälter oder Beutel nach Anspruch 7, bei dem die Folien aus isotaktischem Polymer mit statistisch verteilten Reaktanten eine Dicke zwischen 6 und 10 mil (152 bis 254 µm) haben.

11. Behälter oder Beutel nach Anspruch 7, bei dem die Folien aus isotaktischem Polymer mit statistisch verteilten Reaktanten 5,5 bis 10 Gew.% Polyethylen enthalten.

12. Behälter oder Beutel nach Anspruch 7, bei dem die Folien aus isotaktischem Polymer mit statistisch verteilten Reaktanten Heißversiegelungen liefern, die bei einer Temperatur von 125°C oder weniger erneut schmelzen (umschmelzen) und sich umformen.

13. Behälter oder Beutel nach Anspruch 7 mit einer Kapazität von einem Liter oder mehr.

## Revendications

1. Procédé de production de récipients ou poches thermosoudables constitués d'un film de matière plastique, qui sont stérilisables à chaud à des températures comprises dans l'intervalle de 120° à 130°C et qui reforment leurs soudures à chaud à de telles températures afin de maintenir la flexibilité desdites soudures à chaud et leur résistance à la rupture ou aux fuites sous l'action de forces d'impact et/ou de compression, comprenant la formation desdites poches ou desdits récipients en superposant des films de polymères réactionnels statistiques isotactiques de polypropylène contenant 5 % à 20 % en poids d'éthylène, en thermosoudant lesdits films les uns aux autres pour former des récipients ou des poches sur lesquels les soudures à chaud subissent une refusion et se reforment au cours de la stérilisation à chaud du récipient de la poche à une température comprise dans l'intervalle de 120°C à 130°C.

2. Procédé suivant la revendication 1, dans lequel les films de polymères réactionnels statistiques isotactiques sont des monofilms.

3. Procédé suivant la revendication 1, dans lequel les films de polymères réactionnels statistiques isotactiques comprennent les films de surface de stratifiés multifilms, films de surface qui sont thermosoudés les uns aux autres.

4. Procédé suivant la revendication 1, dans lequel les films de polymères réactionnels statistiques isotactiques ont une épaisseur comprise dans l'intervalle de 6 à 10 mils (152 à 254 µm).

5. Procédé suivant la revendication 1, dans lequel les films de polymères réactionnels statistiques isotactiques contiennent 5,5 % à 10 % en poids de polyéthylène.

6. Procédé suivant la revendication 1, dans lequel les films de polymères réactionnels statistiques isotactiques donnent des soudures à chaud qui refondent et se reforment à une température égale ou inférieure à 125°C.

7. Récipient ou poche thermosoudable constitué d'un film de matière plastique, qui est stérilisable à chaud à des températures comprises dans l'intervalle de 120°C à 130°C et qui reforme ses soudures à chaud à de telles températures afin de maintenir la flexibilité desdites soudures à chaud et leur résistance à une rupture ou une fuite sous l'action de forces d'impact et/ou de compression, comprenant des films superposés de polymères réactionnels statistiques isotactiques de polypropylène contenant 5 % à 20 % en poids d'éthylène qui sont thermosoudés les uns aux autres pour former un récipient ou une poche, les soudures à chaud entre lesdits films étant aptes à la refusion et pouvant se reformer au cours de la stérilisation à une température comprise dans l'intervalle de 120°C à 130°C pour rendre le récipient ou la poche résistant à une rupture ou une fuite sous l'action de forces d'impact et/ou de compression.

8. Récipient ou poche suivant la revendication 7, dans lequel les films de polymère réactionnel statistique isotactique sont des monofilms.

9. Récipient ou poche suivant la revendication 7, dans lequel les films de polymère réactionnel statistique isotactique comprennent les films de surface de stratifiés multifilms, films de surface qui sont thermosoudés les uns aux autres.

10. Récipient ou poche suivant la revendication 7, dans lequel les films de polymères réactionnels statistiques isotactiques ont une épaisseur comprise dans l'intervalle de 6 à 10 mils (152 à 254 µm).

11. Récipient ou poche suivant la revendication 7, dans lequel les films de polymères réactionnels statistiques isotactiques contiennent 5,5 % à 10 % en poids de polyéthylène.

12. Récipient ou poche suivant la revendication 7, dans lequel les films de polymères réactionnels statistiques isotactiques donnent des soudures à chaud qui subissent une refusion et qui se reforment à une température égale ou inférieure à 125°C.

13. Récipient ou poche suivant la revendication 7, ayant une capacité égale ou supérieure à un litre.
